# EUROPEAN PATENT APPLICATION

(11) **EP 4 296 911 A1**
(43) Date of publication of application: **27.12.2023**
(21) Application number: 22755806.1
(22) Date of filing: 18.01.2022
(51) Int. Cl.: G06N 20/00, G06T 7/00

(54) **MACHINE LEARNING DATA GENERATION METHOD, META LEARNING METHOD, MACHINE LEARNING DATA GENERATION DEVICE, AND PROGRAM**

(30) Priority: 16.02.2021 JP 2021022715; 27.07.2021 JP 2021122787
(71) Applicant: OMRON Corporation, Kyoto 600-8530 (JP)
(72) Inventor: MIYAMOTO, Mami, Kyoto-shi, Kyoto 600-8530 (JP); MURA, Seitaro, Kyoto-shi, Kyoto 600-8530 (JP); HIROHASHI, Yuki, Kyoto-shi, Kyoto 600-8530 (JP); HASHIMOTO, Atsushi, Tokyo 113-0033 (JP); TOKU, Takahiro, Kyoto-shi, Kyoto 600-8530 (JP); TSUCHIYA, Naoki, Kyoto-shi, Kyoto 600-8530 (JP); IJIRI, Yoshihisa, Kyoto-shi, Kyoto 600-8530 (JP); OKAMOTO, Yamato, Tokyo 108-0075 (JP)
(74) Representative: Appelt, Christian W.
(86) International application number: PCT/JP2022/001626
(87) International publication number: WO 2022/176481

(57) **Abstract**

A data generation method for generating data for domain generalization in machine learning includes performing, with a computer, augmentation using training data as raw data usable to train a machine learning model, and extracting, with the computer, a dataset including the raw data and data generated through the data augmentation as a dataset for the domain generalization.

## Description

### CROSS-REFERENCE TO RELATED APPLICATION

This application claims priority to Japanese Patent Application Nos. 2021-22715 filed on February 16, 2021 and 2021-122787 filed on July 27, 2021, the contents of which are incorporated herein by reference.

### FIELD

The present invention relates to a machine learning data generation method, a meta-learning method, a machine learning data generation apparatus, and a program.

### BACKGROUND

Building a machine learning model involves training using a large volume of training data. When an insufficient volume of training data is available, data augmentation is performed to increase the data volume. Data augmentation is a technique for changing raw training data and generating various sets of data using a limited volume of raw training data.

Data augmentation is an effective technique in the field of meta-learning, which is learning of a learning process in machine learning. For example, Patent Literature 1 describes a method for training a meta-learning network.

### CITATION LIST

### PATENT LITERATURE

Patent Literature 1: Japanese Unexamined Patent Application Publication No. 2020-144849

### SUMMARY

### TECHNICAL PROBLEM

For generalization learning that uses data in many domains to improve generalization performance, obtaining new data can be costly. Although the number of domains for learning may be increased in a pseudo manner, simply increasing the domain data may generate data that includes changed portions that are actually to be unchanged from the raw data. This may cause overfitting or cause difficulty in optimization in learning, thus failing to improve the generalization performance.

In such circumstances, one or more aspects of the present invention are directed to a method for generating training data that improves the generalization performance of a learning model.

### SOLUTION TO PROBLEM

In response to the above issue, the technique according to one or more aspects of the present invention provides the structures described below.

A machine learning data generation method according to an aspect of the present invention is a data generation method for generating data for domain generalization in machine learning. The method includes performing, with a computer, augmentation using training data as raw data usable to train a machine learning model, and extracting, with the computer, a dataset including the raw data and data generated through the data augmentation as a dataset for the domain generalization.

The above structure generates new data for generalization learning without being costly, and improves the generalization performance in generalization learning. A domain herein is a dataset obtained in a specific environment. Examples of machine learning include supervised learning, unsupervised learning, and reinforced learning. In supervised learning, a dataset is a set of data including pairs of data and labels. In unsupervised learning, a dataset is a set of data. In reinforced learning, a dataset represents the state of a space (environment) containing an agent. Domain generalization is a technique for building, using a set of training data extracted from multiple distributions, a machine learning model that is robust against domain shifts that occur from distributions of unknown domains. A domain shift herein refers to a difference in distribution between a set of training data and a set of testing data. A set of training data refers to a set of data used for training a machine learning model. A set of testing data refers to a set of data used for verifying (testing) a machine learning model.

The raw data and the data generated through the data augmentation may be stored as domains of data. The extracting may include extracting, as the dataset for the domain generalization, at least one domain of the raw data and at least one domain of the data generated through the data augmentation. This allows extracted domains for learning to include both a domain of raw data and a domain of generated data, thus preventing overfitting that may be caused by training data either being raw data alone or being generated data alone.

The raw data may include a target portion and a non-target portion. The augmentation may include performing data augmentation to change the non-target portion included in the raw data. This allows the non-target portion to be changed as appropriate, without changing the target portion that is to be unchanged before and after data augmentation. A target portion refers to a portion that directly affects a learning target (task) to be learned through machine learning and is a portion to be targeted by the task. A non-target portion refers to a portion that does not affect a task and mainly corresponds to an environment (e.g., a background or brightness) for which data is to be obtained.

In supervised learning, a target portion refers to a portion that affects the relationship between data and labels. An example target portion refers to information about a target to be recognized. A target is to undergo determination for use in machine learning. Examples of the target include an object to be recognized in image recognition (e.g., a vehicle in vehicle recognition), voice data excluding noise and ambient sound in voice recognition, and text in knowledge extraction. Examples of the non-target portion in supervised learning include an environment (e.g., a background or brightness) containing a target.

In unsupervised learning, a target portion refers to a portion that affects the relationship between data and features to be obtained from the data, and is information about, for example, a portion corresponding to a target to be clustered. Similarly to a target in supervised learning, a target in unsupervised learning is to undergo determination for use in machine learning. Examples of a non-target portion in unsupervised learning include an environment (e.g., a background or brightness) containing a target.

In reinforced learning, a target portion is information about a part of an environment containing an agent that affects rewarding (task completion) in the environment containing the agent. For a task of gripping an object with a robot, for example, a target portion is information about a target and information about factors that affect gripping of the target (e.g., tilting of a surface on which the target is placed or friction on the surface). A non-target portion in reinforced learning is information about a portion that does not affect rewarding. Examples of the non-target portion include the color of a surface on which the target is placed or the brightness on the surface.

The raw data may include image data. The target portion may include an image of a target. The augmentation may include performing data augmentation to change at least one of an environment of the target or an imaging condition for the target in an image included in the raw data. This allows generation of various sets of training data usable for generalization learning in training a learning model for image recognition.

The augmentation may include performing data augmentation to change the environment of the target by changing at least one of a brightness, a background, or a color tone of the image included in the raw data. This allows generation of various sets of training data simulating changes in environments for imaging, such as time and weather.

The augmentation may include performing data augmentation to change the imaging condition for the target by performing at least one of rotating, inverting, enlarging, reducing, moving, trimming, or filtering of the image included in the raw data. This allows generation of various sets of training data simulating different imaging conditions.

The raw data may include voice data. The target portion may include a specific voice. The augmentation may include performing data augmentation to change an ambient sound or noise included in the voice data included in the raw data. This allows generation of various sets of training data usable for generalization learning in training a learning model for voice recognition.

The augmentation may include performing data augmentation to add an ambient sound to the voice data included in the raw data. This allows generation of various sets of training data simulating different sites at which voice data is obtained.

The raw data may include signal data. The target portion may include a specific signal pattern. The augmentation may include performing data augmentation to change noise in the signal data included in the raw data. This allows generation of various sets of training data usable for generalization learning in training a learning model for, for example, signal analysis.

The augmentation may include performing data augmentation to add noise to the signal data included in the raw data. This allows generation of various sets of training data simulating different sites at which signal data is obtained.

The raw data may include text data. The target portion may include a specific text pattern. The augmentation may include performing data augmentation to change a wording of the text data included in the raw data. This allows generation of various sets of training data usable for generalization learning in training a learning model for, for example, knowledge extraction.

The augmentation may include performing data augmentation to change at least one of a beginning or an ending of the text data included in the raw data. This allows generation of various sets of training data simulating different wordings.

The raw data may include data associated with a state of an environment containing an agent in reinforced learning. The target portion may include information about a portion affecting rewarding. The augmentation may include performing data augmentation to change a condition of a portion of the raw data not affecting the rewarding in the state of the environment. This allows generation of various sets of training data usable for generalization learning in training a reinforced learning model.

The extracting may include extracting the dataset to include a predetermined ratio of a domain of the raw data and a domain of the data generated through the data augmentation. This allows extracted domains for learning to include both a domain of raw data and a domain of generated data, thus preventing overfitting that may be caused by training data either being raw data alone or being generated data alone. The predetermined ratio may be specified by a user or prestored as a parameter.

A meta-learning method according to an aspect of the present invention includes performing domain generalization through meta-learning using a dataset for the domain generalization generated with the above machine learning data generation method.

The above structure extracts a dataset including both raw data and data generated through augmentation in the learning process (learning loop), and performs meta-learning using the extracted dataset. This prevents overfitting and improves the performance of domain generalization through meta-learning.

The domain generalization through meta-learning may include performing domain generalization through meta-learning using a plurality of datasets each including at least one domain of the raw data and at least one domain of the data generated through the data augmentation. This allows meta-learning to use a dataset including both the raw data and the data generated through data augmentation, prevents overfitting, and improves the performance of domain generalization through meta-learning.

A domain generalization learning method according to an aspect of the present invention includes performing domain generalization learning using a dataset for domain generalization generated with the above machine learning data generation method.

This structure extracts a dataset including both raw data and data generated through augmentation in an early stage of domain generalization learning, and performs domain generalization learning using the extracted dataset. This prevents overfitting and improves the generalization performance in domain generalization learning.

A machine learning data generation apparatus according to an aspect of the present invention is a data generation apparatus for generating data for domain generalization in machine learning. The machine learning data generation apparatus includes a data generator that performs data augmentation using training data as raw data usable to train a machine learning model, and a training data extractor that extracts, as a dataset for the domain generalization, a dataset including the raw data and data generated through the data augmentation.

The above structure generates new data for generalization learning without being costly, and improves the generalization performance in generalization learning.

A program according to an aspect of the present invention is a program for causing a computer to generate data for domain generalization in machine learning to function as a data generator that performs data augmentation using training data as raw data usable to train a machine learning model and a training data extractor that extracts, as a dataset for the domain generalization, a dataset including the raw data and data generated through the data augmentation.

The above structure generates new data for generalization learning without being costly, and improves the generalization performance in generalization learning.

### ADVANTAGEOUS EFFECTS

The training data generation method according to the above aspects of the present invention improves the generalization performance of a learning model.

### BRIEF DESCRIPTION OF THE DRAWINGS

FIG. 1 is a schematic diagram describing a machine learning data generation process according to an embodiment of the present invention.
FIG. 2 is a block diagram of a machine learning data generation apparatus according to the embodiment of the present invention, showing its example hardware configuration.
FIG. 3 is a block diagram of the machine learning data generation apparatus according to the embodiment of the present invention, showing its example functional components.
FIG. 4 is a flowchart showing an example operation of the machine learning data generation apparatus according to the embodiment of the present invention.
FIG. 5 is a flowchart showing an example operation of the machine learning data generation apparatus according to the embodiment of the present invention.
FIG. 6 is a diagram describing an example machine learning data generation process according to the embodiment of the present invention.
FIG. 7 is a diagram describing example operations of data augmentation performed by the machine learning data generation apparatus according to the embodiment of the present invention.
FIG. 8 is a diagram describing an example method for extracting datasets for training generated by the machine learning data generation apparatus according to the embodiment of the present invention.
FIG. 9 is a diagram describing an example method for extracting datasets for training generated by the machine learning data generation apparatus according to the embodiment of the present invention.
FIG. 10 is a table showing example operations of data augmentation for different data types through the machine learning data generation process according to the embodiment of the present invention.
FIG. 11 is a diagram describing an example machine learning data generation process according to the embodiment of the present invention.
FIG. 12 is a diagram describing an example machine learning data generation process according to the embodiment of the present invention.
FIG. 13 is a diagram describing an example machine learning data generation process according to the embodiment of the present invention.
FIG. 14 is a diagram describing an example machine learning data generation process according to the embodiment of the present invention.
FIG. 15 is a flowchart showing an example operation of the machine learning data generation apparatus according to the embodiment of the present invention.
FIG. 16 is a diagram describing an example machine learning data generation process according to the embodiment of the present invention.
FIG. 17 is a diagram describing an example machine learning data generation process according to the embodiment of the present invention.
FIG. 18 is a table showing example operations of data augmentation for different data types through the machine learning data generation process according to the embodiment of the present invention.
FIG. 19 is a diagram describing an example machine learning data generation process according to the embodiment of the present invention.
FIG. 20 is a diagram describing an example machine learning data generation process according to the embodiment of the present invention.

### DETAILED DESCRIPTION

One or more embodiments of the present invention (hereafter, the present embodiment) will now be described with reference to the drawings. The embodiments described below are mere examples of the present invention in all aspects. The embodiments may be variously modified or altered without departing from the scope of the present invention. More specifically, the present invention may be implemented as appropriate using the configuration specific to each embodiment. Although data used in the present embodiment is described in a natural language, such data may be specifically defined using any computer-readable language, such as a pseudo language, commands, parameters, or a machine language.

### 1. Example Use

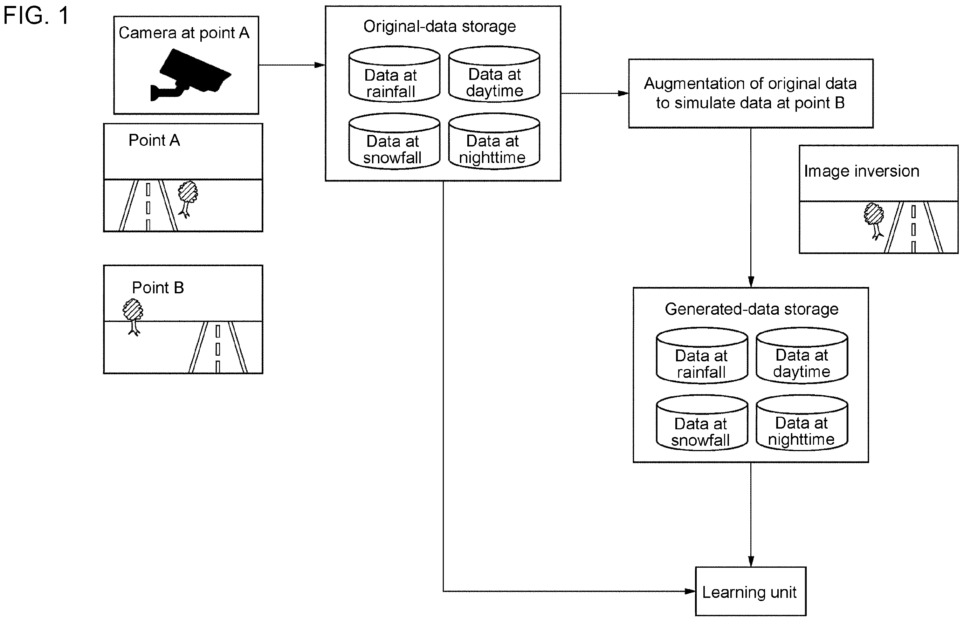

An example use of a structure according to one embodiment of the present invention will be described with reference to FIG. 1. FIG. 1 is a schematic diagram describing a machine learning data generation process performed by a machine learning data generation apparatus 10 according to an embodiment of the present invention. In the example shown in FIG. 1, image data captured with a camera installed at point A is used as original data (raw data) and undergoes data augmentation to generate training data. The original data is stored as datasets in four domains, or specifically, image data captured in rainfall, image data captured in snowfall, image data captured in the daytime, and image data captured in the nighttime. In the example shown in FIG. 1, the original data in each of these domains is processed to invert images. The datasets resulting from such data augmentation are stored as data at rainfall, data at snowfall, data at daytime, and data at nighttime. Data augmentation includes extending data.

In the learning process, a predetermined number of datasets are extracted to include a domain of original data and a domain of generated data. The extracted datasets are then used as training datasets in meta-learning. For example, the original data is used to extract data at rainfall and data at nighttime, whereas the generated data is used to extract data at snowfall and data at daytime. The extracted datasets in these domains are then used as training datasets in meta-learning. The raw data and the generated data have predetermined structures for meta-learning.

### 2. Example Configuration

### 1. Hardware Configuration

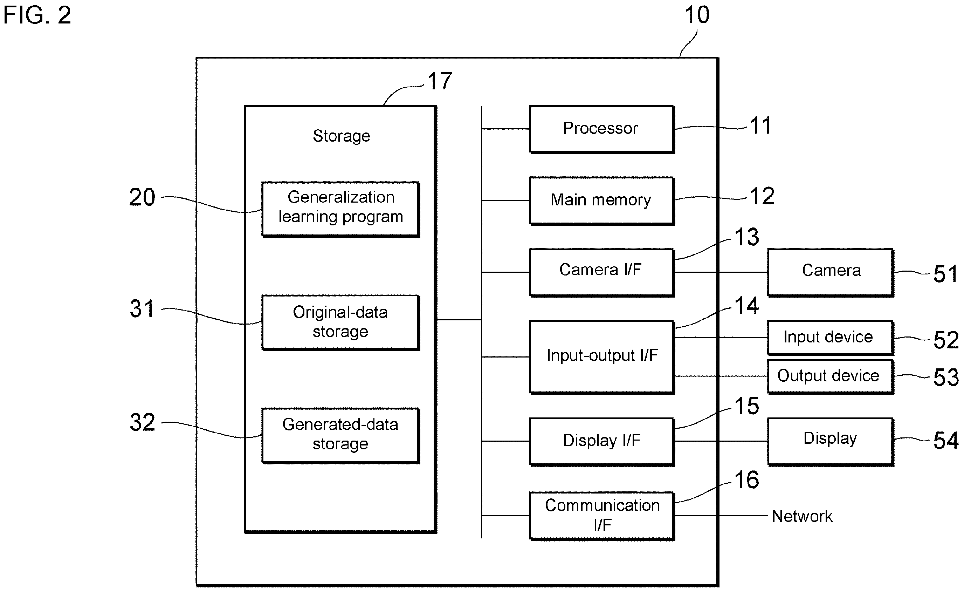

An example hardware configuration of the machine learning data generation apparatus 10 according to the present embodiment will now be described with reference to FIG. 2.

The machine learning data generation apparatus 10 is a computer system including, as its hardware resource, a processor 11, a main memory 12, a camera interface 13, an input-output interface 14, a display interface 15, a communication interface 16, and a storage 17.

The storage 17 is a computer-readable recording medium, such as a disk medium (e.g., a magnetic recording medium or a magneto-optical recording medium), or a semiconductor memory (e.g., a volatile memory or a nonvolatile memory). Such a recording medium may be referred to as, for example, a non-transitory recording medium. The storage 17 stores a generalization learning program 20. The generalization learning program 20 is a computer program for causing the processor 11 to implement a meta-learning method according to the present embodiment. The generalization learning program 20 is loaded from the storage 17 into the main memory 12 and interpreted and executed by the processor 11 to implement the meta-learning method according to the present embodiment.

A camera 51 is connected to the camera interface 13. The camera 51 may include, for example, an image sensor that captures color images. The camera 51 may be incorporated in the machine learning data generation apparatus 10 or may be externally connected to the machine learning data generation apparatus 10. The images captured with the camera 51 are stored as original data in an original-data storage 31 included in the storage 17.

An input device 52 and an output device 53 are connected to the input-output interface 14. The input device 52 is, for example, a keyboard, a mouse, or a touchpad. The output device 53 outputs various processing results or other information. The output device 53 is, for example, a printer.

A display 54 is connected to the display interface 15. The display 54 includes a user interface for receiving instructions from a user, and displays raw data used in data augmentation and generated data resulting from the data augmentation.

### 2. Functional Components

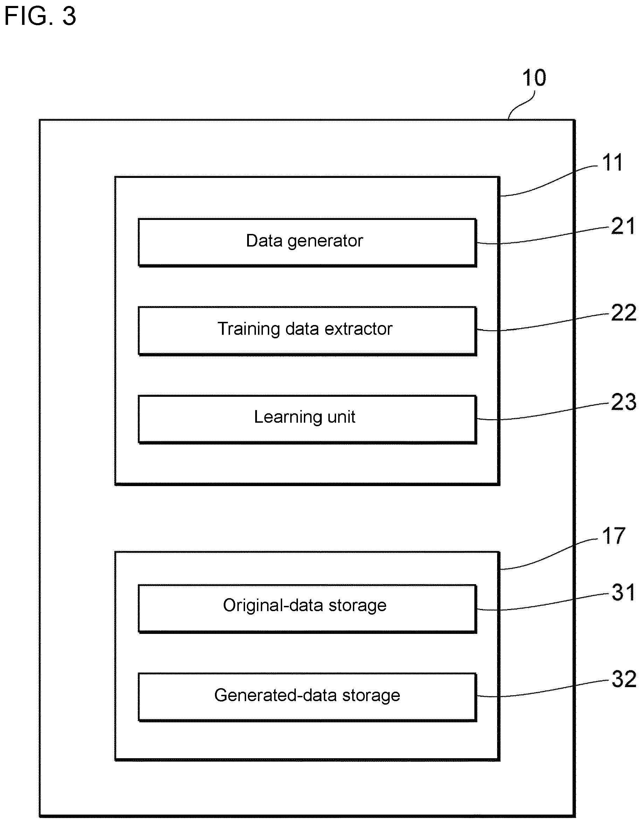

The machine learning data generation apparatus 10 according to the embodiment of the present disclosure includes example functional components that will now be described with reference to FIG. 3. FIG. 3 is a block diagram of functional modules implemented by the processor 11. As shown in FIG. 3, the functional modules include a data generator 21, a training data extractor 22, and a learning unit 23.

The storage 17 includes the original-data storage 31 and a generated-data storage 32. The original-data storage 31 stores raw data captured with, for example, the camera 51 to undergo data augmentation. The generated-data storage 32 stores data generated through data augmentation.

### 3. Operation Example

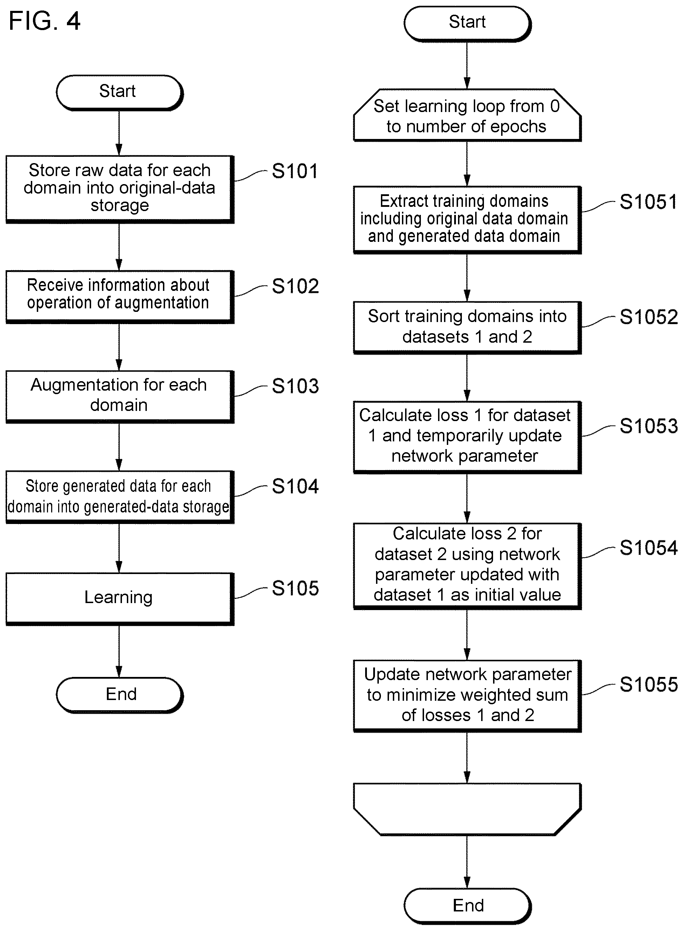

A method for generating machine learning data with the machine learning data generation apparatus 10 according to the present embodiment will now be described with reference to FIGs. 4 to 8. In the example described below, image data used as raw data undergoes data augmentation to generate new image data.

FIG. 4 is a flowchart showing an example machine learning data generation method according to the embodiment of the present invention. Although supervised learning is used as an example of machine learning in the example shown in FIG. 4, the same applies to unsupervised learning or reinforced learning.

In step S101, raw data for each domain is stored into the original-data storage 31 in the machine learning data generation apparatus 10. The raw data is, for example, a set of training data prepared by annotating image data captured at point A as shown in FIG. 1. The raw data is stored as data in four domains, or specifically, data at rainfall, data at snowfall, data at daytime, and data at nighttime, depending on the weather under which or the time period in which the data is captured.

The machine learning data generation apparatus 10 may obtain, through a communication line, images captured with the camera installed at point A, or may copy image data stored in an external storage device into the storage 17 in the machine learning data generation apparatus 10.

In step S102, the machine learning data generation apparatus 10 receives information about an operation of data augmentation. The information about an operation of data augmentation may be input by the user with, for example, the input device 52. As shown in, for example, FIG. 1, the information about an operation of data augmentation may be a specific operation such as image inversion.

In step S103, the data generator 21 in the machine learning data generation apparatus 10 performs data augmentation on the raw data with the specified operation. For example, the data generator 21 may horizontally invert each image stored in the original-data storage 31.

In step S104, the data generator 21 in the machine learning data generation apparatus 10 stores image data generated through data augmentation into the generated-data storage 32. As shown in FIG. 1, the generated data may also be stored for each domain in correspondence with the domain of the corresponding raw data. For example, image data resulting from augmenting data at rainfall is stored into a domain storage for data at rainfall in the generated-data storage 32.

In step S105, the machine learning data generation apparatus 10 performs generalization learning in meta-learning performed by the learning unit 23. In step S105, the processing in steps S1051 to S1055 is repeated the number of times the learning process is performed. A specific method of learning may be, for example, meta-learning for domain generalization (MLDG) (Reference 1), but may be any generalization learning method used in meta-learning.

### Reference 1: Da Li et al. Learning to Generalize: Meta-Learning for Domain Generalization. [Online] https://arxiv.org/abs/1710.03463

In step S1051, the training data extractor 22 first extracts, from the storage 17, multiple domains including both a domain of raw data stored in the original-data storage 31 and a domain of generated data stored in the generated-data storage 32. The training data extractor 22 extracts, based on a parameter defined for extracting domains, domains of raw data and domains of generated data at a predetermined ratio. The parameter for domain extraction may be a value specified every time with the input device 52, or may be prestored in a domain extraction parameter definition table in the storage 17.

In step S1052, the training data extractor 22 sorts the multiple domains extracted in step S1051 into a dataset 1 (training domains) and a dataset 2 (verification domains).

In step S1053, the learning unit 23 calculates a loss (loss 1) being a difference between a true label and a predicted label for the dataset 1, and temporarily updates the network parameter (machine learning parameter).

In step S1054, the learning unit 23 calculates a loss (loss 2) for the dataset 2 using the network parameter updated in step S1053 as an initial value.

In step S1055, the learning unit 23 updates the network parameter to minimize the weighted sum of the loss 1 and the loss 2. The processing in steps S1051 to S1055 is repeated the number of times the learning process is performed to optimize the network parameter.

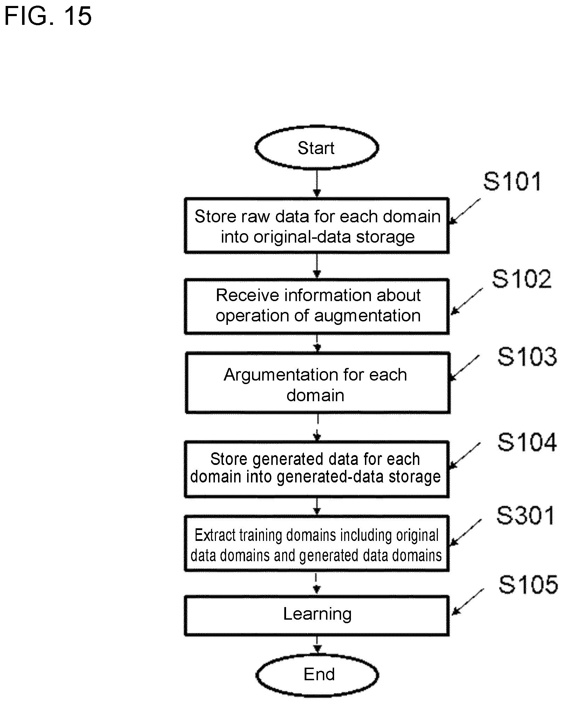

With a domain generalization learning method such as a multi-task adversarial network (MTAN) (Reference 2), as shown in the flowchart in FIG. 15, training datasets including both domains of raw data and domains of generated data are extracted in step S301 after the generated data is stored into the generated-data storage 32 in step S104. In step S105, a generalization learning process is performed using the extracted datasets.

### Reference 2: Yang Liu et al. Multi-Task Adversarial Network for Disentangled Feature Learning. [Online] https://openaccess.thecvf.com/content_cvpr_2018/html/Liu_Multi-Task_Adversarial_Network-CVPR_2018_paper.html

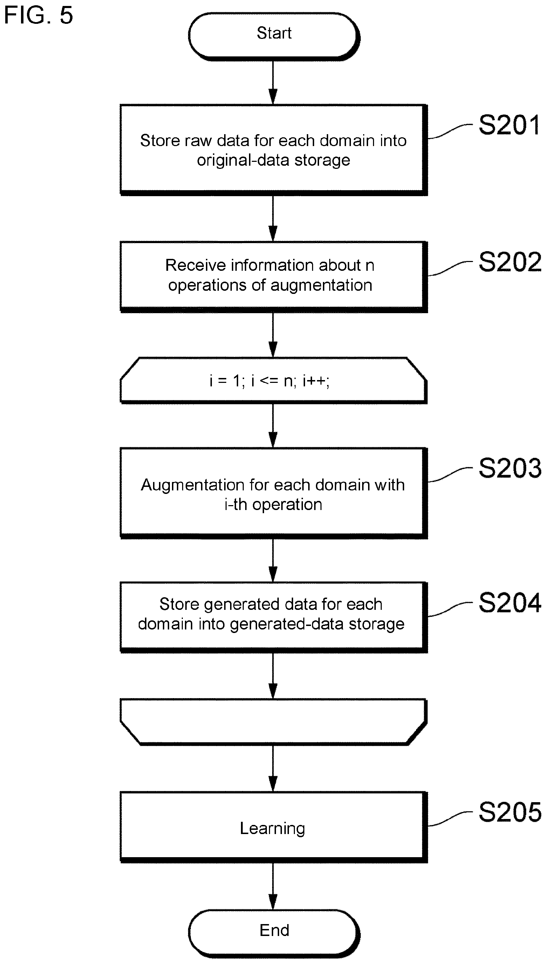

Another example machine learning data generation method according to the embodiment of the present invention will now be described with reference to the flowchart in FIG. 5.

In step S201, raw data for each domain is stored into the original-data storage 31, as in step S101 in FIG. 4.

In step S202, information about an operation of data augmentation is received as in step S102 in FIG. 4. In the example shown in FIG. 5, information about multiple operations (n operations) may be received at a time.

In steps S203 and S204, the data generator 21 sequentially performs data augmentation with n specified operations to generate data. More specifically, the first operation (e.g., inversion) of data augmentation is performed first, and the generated data is stored. The generated data resulting from the inversion then undergoes the second operation (e.g., enlargement) of data augmentation, and the generated data is stored. The generated data then undergoes subsequent operations up to the n-th operation of data augmentation, and the generated data resulting from the n-th operation is stored as final generated data for each domain into the generated-data storage 32.

In step S205, the machine learning data generation apparatus 10 performs generalization learning in meta-learning performed by the learning unit 23. In step S205, the same processing as in steps S1051 to S1055 in FIG. 4 is repeated the number of times the learning process is performed.

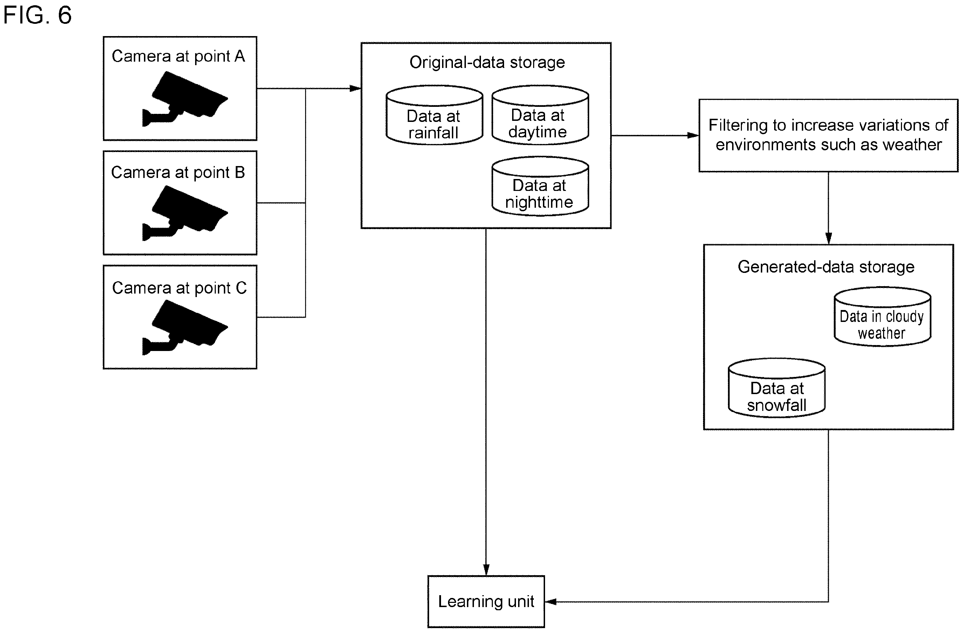

The raw data includes portions to be unchanged before and after data augmentation (target portions), and also includes portions to be extended and modified through data augmentation (non-target portions). In the examples of FIGs. 1 and 6 using a machine learning model for recognizing a vehicle on a road, a target portion of image data corresponds to an image of the vehicle traveling on the road. Thus, portions to undergo data augmentation, or portions to be extended or modified (non-target portions), include surrounding environments (e.g., a landscape and a road shape) and imaging conditions (e.g., a magnification, an imaging direction, weather, and a time period).

Example operations for augmenting image data include, for example, rotating, inverting, enlarging, reducing, moving, trimming, and filtering of an image included in raw data, changing the brightness of the image included in the raw data (to increase variations of weather and a time period), changing the background, and changing the color tones (to increase variations of weather and a time period). FIG. 6 is a diagram describing, for example, filtering. In the example shown in FIG. 6, raw data for data at daytime and raw data for data at nighttime are filtered to extract images under specific weather conditions (rainfall or cloudy weather).

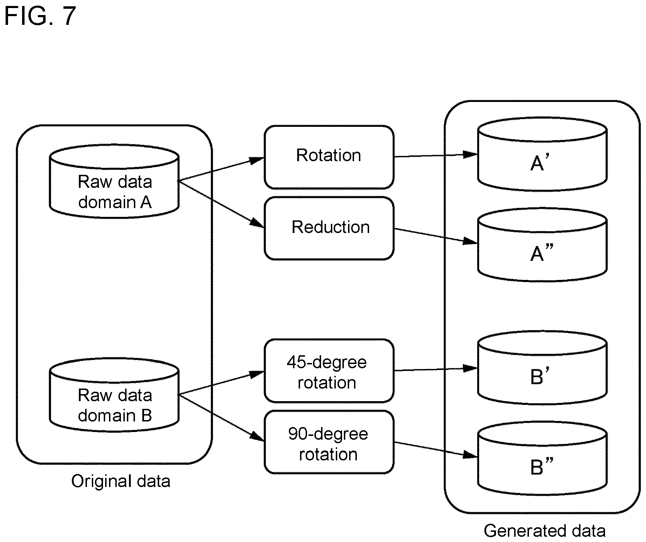

Data augmentation may include augmenting the same raw data with different extensions to generate data in different domains. As shown in FIG. 7, for example, raw data in domain A may undergo rotation to obtain generated data that is stored as generated data in domain A', and may then undergo reduction to obtain generated data that is stored as generated data in domain A". The data may also undergo the same extension with different processing degrees (levels). As shown in FIG. 7, for example, raw data in domain B may undergo rotation by an angle of 45 degrees (processing degrees) to obtain generated data that is stored as generated data in domain B', and raw data in domain B may undergo rotation by an angle of 90 degrees (processing degrees) to obtain generated data that is stored as generated data in domain B". As in the example shown in FIG. 7, raw data in different domains may undergo different operations of data augmentation (rotation and reduction for data in domain A and 45-degree rotation and 90-degree rotation for data in domain B).

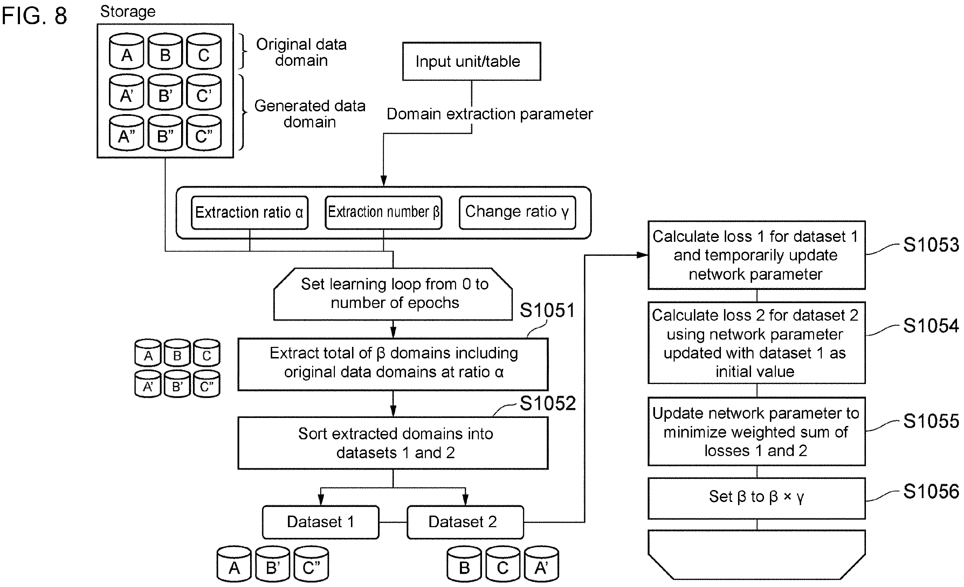

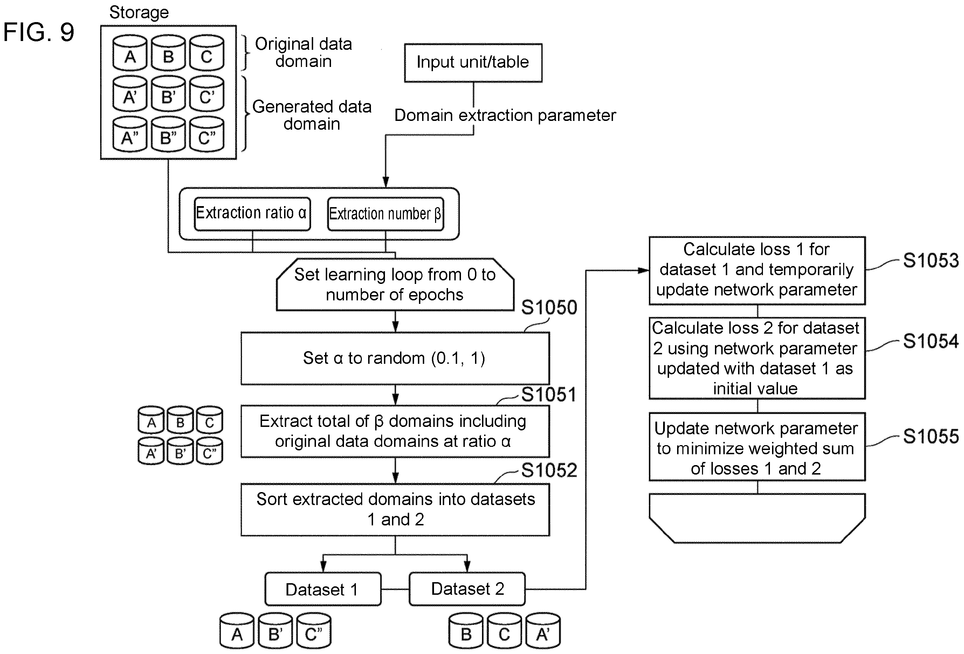

An example method for extracting datasets in steps S1051 to S1055 in FIG. 4 will now be described with reference to FIGs. 8 and 9. In the example shown in FIG. 8, the parameter for extracting domains is defined to extract a total of β domains including domains of raw data at a ratio of α. At the end of a single learning loop, the total of β domains to be extracted changes to the value β × γ, or β multiplied by the ratio of change γ (step S1056). For example, when γ = 0.99, the number of β domains to be extracted is about 90% of the initial value after the learning process is performed ten times. At the ratio of α being constant, the ratio of the raw data to the generated data is constantly α:1 - α. Any domain that satisfies the definition of the parameter may be extracted. The β extracted domains are sorted into the two datasets (datasets 1 and 2). Meta-learning is then performed repeatedly to minimize the sum of the losses for these two datasets.

In the example shown in FIG. 9, the ratio of α for extracting the domains of raw data is changed every time the learning process is performed, whereas the number of β domains to be extracted remains constant. The ratio of α for extracting domains is set to a random value of 0.1 to 1 at the start of the first single learning loop (step S1050), and then changes at the end of each learning loop. For example, when α = 0.1, domains of the raw data are extracted at the proportion of 10%. With the number of β domains to be extracted being constant, the total number of extracted domains remains constant. The β extracted domains are then sorted into the two datasets (datasets 1 and 2). Meta-learning is then performed repeatedly to minimize the sum of the losses for these two datasets.

The parameter, such as the ratio for extracting domains or the number of domains to be extracted, may remain constant over repeated learning processes, rather than being changed at the end of each learning process. The parameter for extracting domains is not limited to the above example. For example, the parameter for extracting domains may be the number of domains of raw data to be extracted, in place of the ratio of raw data to be extracted.

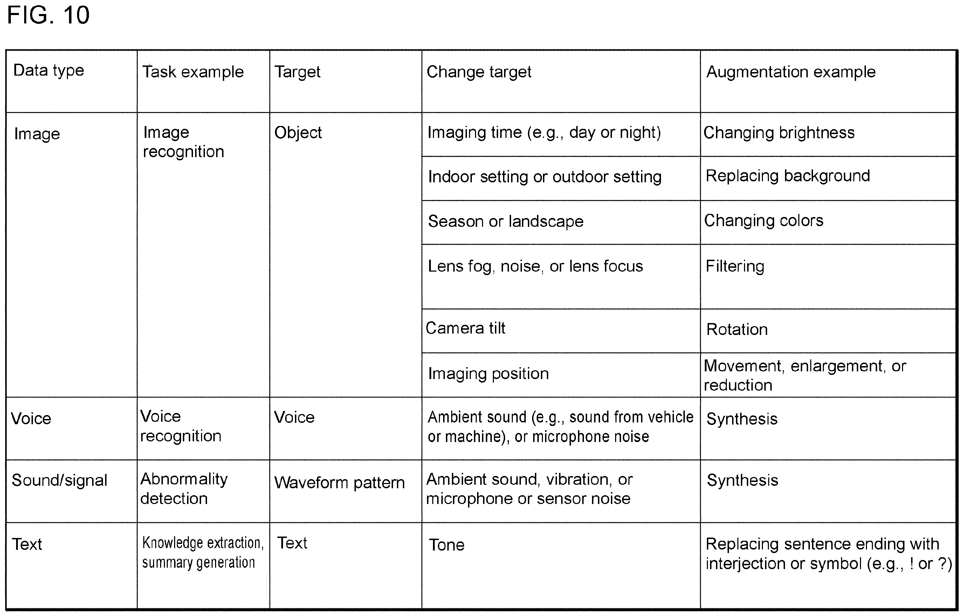

Although the training data in the above embodiment is image data, the training data may be other than image data. FIG. 10 is a table showing various types of training data used with the machine learning data generation method and example operations of data augmentation for such training data using supervised or unsupervised learning as an example of machine learning. In the table, the data type indicates the type of training data, the task example indicates an example model for learning performed using training data, the target indicates a portion to be unchanged before and after data augmentation (target portion), the change target indicates a portion to be extended or modified through data augmentation (non-target portion), and the augmentation example indicates an operation of augmentation performed on the change target.

For the data type being an image (e.g., training data for an image recognition model), for example, the target may be a specific object (e.g., a vehicle for vehicle recognition and a face for face recognition). Examples of a change target for this data type and of augmentation include changing the imaging time by changing the image brightness, changing between an indoor setting and an outdoor setting by replacing the background, changing a season or a landscape by changing the colors, expressing a change in the lens fog, noise, or the focus of the lens by filtering, changing the camera tilt by rotating the image, and changing the imaging position by moving, enlarging, or reducing the image.

For the data type being a voice (e.g., training data for a voice recognition model), the target is a specific voice (e.g., a human voice). Examples of a change target for this data type and of augmentation include synthesizing ambient sound (e.g., sound from a traveling vehicle or sound from an operating machine) and adding the sound.

For the data type being a sound or a signal (e.g., training data for an abnormality detection model), the target may be a specific waveform pattern (e.g., an abnormal sound). Examples of a change target for this data type and of augmentation include adding ambient sound (e.g., sound from an operating machine), vibration, or noise from a microphone or from a sensor by using a synthesized signal.

For the data type being a text (e.g., training data for a model for knowledge extraction or summary generation), the target may be a specific text (e.g., a review article). Examples of a change target for this data type and of augmentation include changing the tone by replacing the ending of a sentence with another element (e.g., an interjection or a symbol).

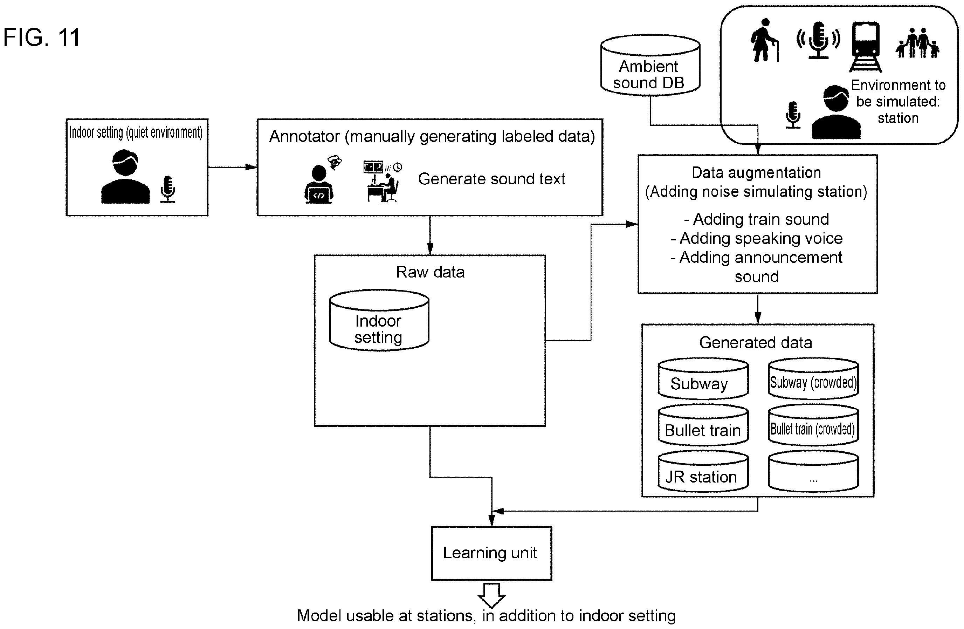

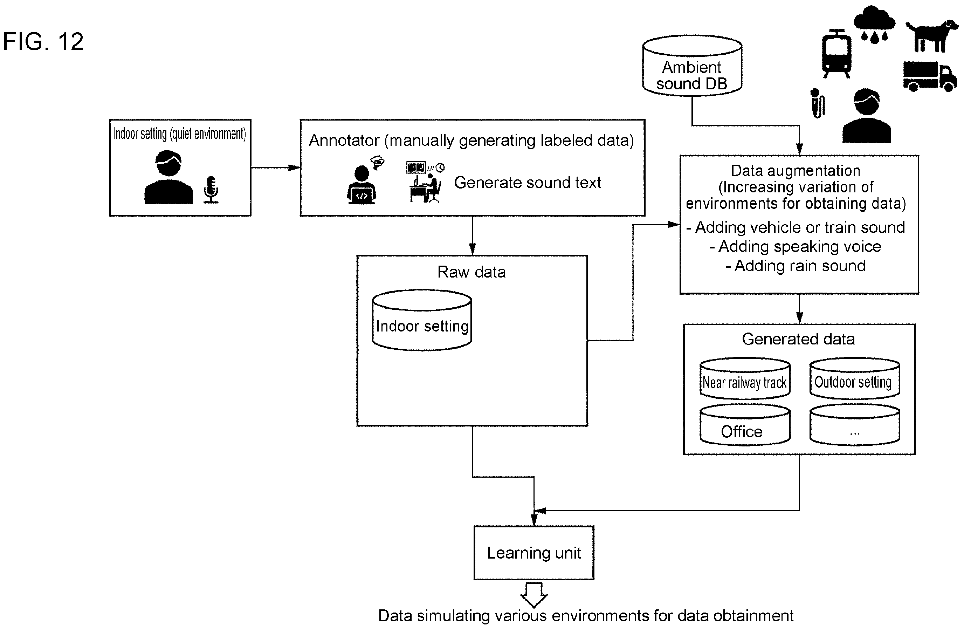

FIGs. 11 and 12 are diagrams describing example methods for generating machine learning data using data with the data type being voice data using supervised learning as an example of machine learning. In the example shown in FIG. 11, voice data recorded indoors (in a quiet place) is used as raw data to generate data with noise simulating noise at a train station. More specifically, noise (e.g., a sound from a train, a speaking voice, and an announcement sound) at various train stations (e.g., a subway station and a bullet train station) is added to raw data through data augmentation. The generated data is then used in meta-learning to generalize machine learning for places such as train stations, in addition to quite places such as an indoor setting.

In the example shown in FIG. 12, voice data recorded indoors (in a quiet place) is used as raw data to generate data simulating data obtained in a variety of environments. More specifically, a sound from a vehicle or from a train, a speaking voice of a human, or a rain sound is added to generate data simulating data to be obtained, for example, near a railway track, in an office, or in an outdoor setting. The generated data is then used in meta-learning to generalize machine learning to be responsive to various environments for obtaining data.

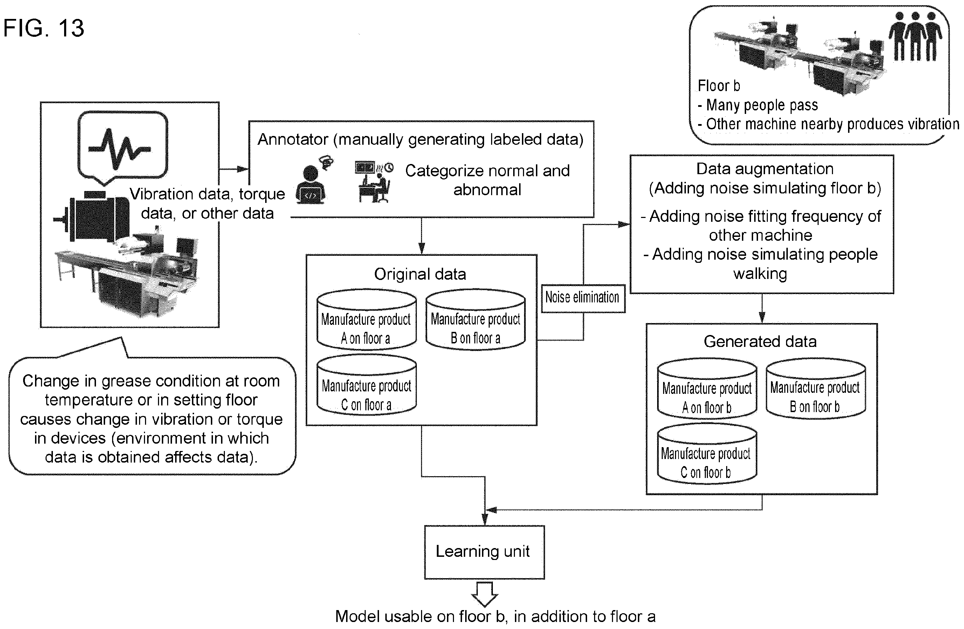

FIG. 13 is a diagram describing an example method for generating machine learning data using data with the data type being a signal using supervised learning as an example of machine learning. FIG. 13 shows an example of generation of training data for training a model that analyzes machine vibration data to detect an abnormality. The raw data is data about vibration during manufacture of products A, B, and C obtained on floor a. The raw data undergoes data augmentation to generate vibration data simulating data to be obtained on floor b. More specifically, noise simulating noise from people passing on floor b, or noise simulating vibration generated by a machine on floor b, which does not occur on floor a, is added to the data as noise. The training data generated in this manner is used to generalize machine learning for the floor environment.

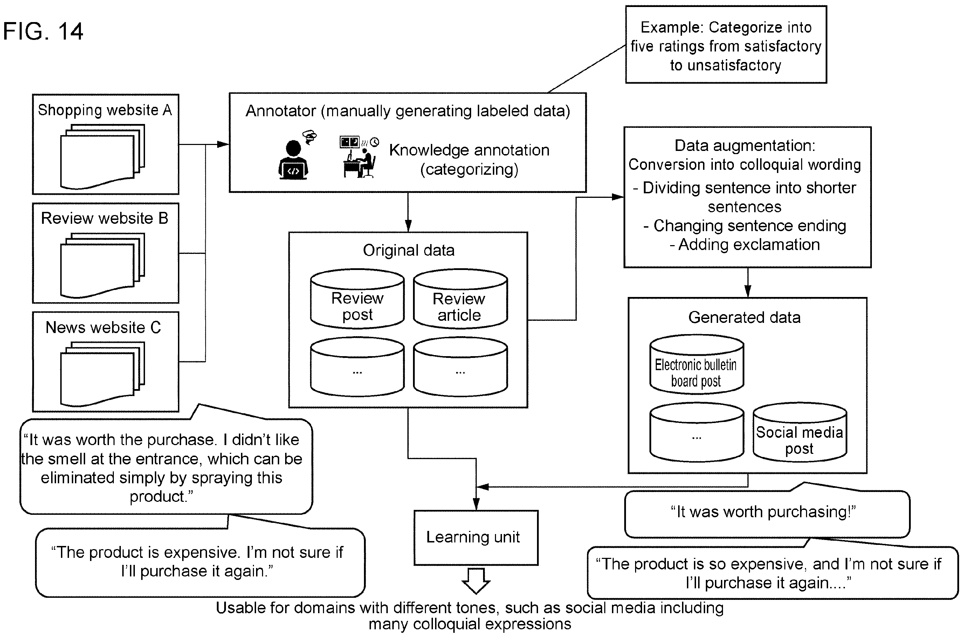

FIG. 14 is a diagram describing an example method for generating machine learning data using data with the data type being text data using supervised learning as an example of machine learning. FIG. 14 shows an example of generation of training data for training a learning model that categorizes text about the rating of a product posted at various websites by the degree of satisfaction about the product. The raw data includes review posts on online shopping or review websites and review articles at news websites. The raw data undergoes data augmentation that converts the wording into a colloquial wording. More specifically, the data is processed to divide each sentence into shorter sentences, change the ending of each sentence to a colloquial expression, or add an exclamation to the beginning of each sentence. This generates data simulating data to be posted on an electronic bulletin board or on social networking sites (SNS). The training data generated in this manner is used to generalize machine learning for reviews containing many colloquial expressions.

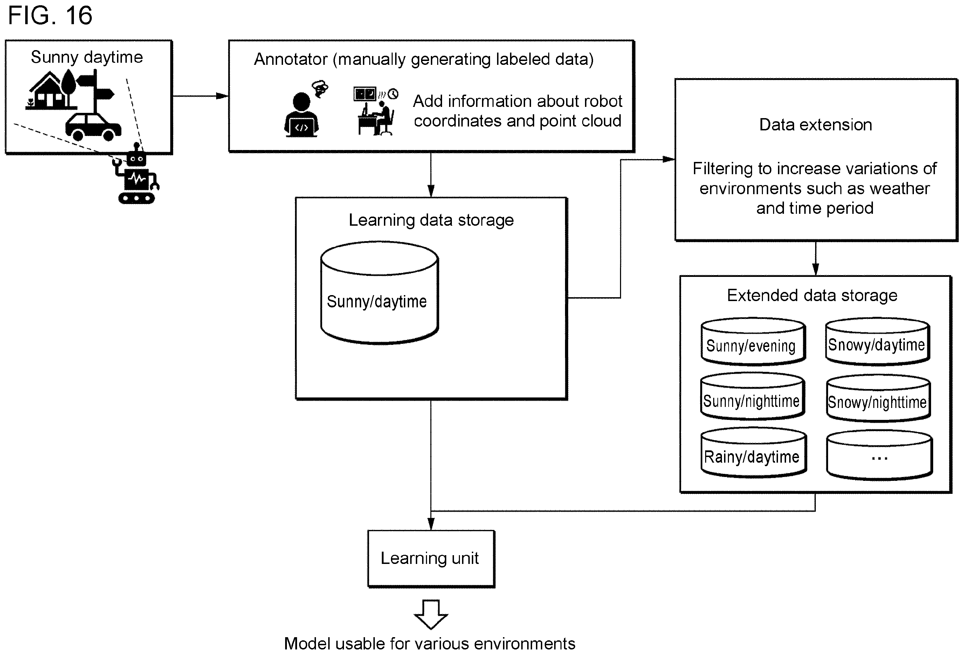

FIG. 16 is a diagram describing an example method for generating machine learning data using data with the data type being an image using supervised learning as an example of machine learning. The method is herein used for visual simultaneous localization and mapping (SLAM). Visual SLAM is used in, for example, an automated guided vehicle (AGV) or an autonomous mobile robot (AMR), to simultaneously estimate its position using a video captured with a camera and create an environmental map. The raw data includes an image captured with a camera and a set of coordinates or a set of point clouds estimated by the robot. Information about the coordinates or the point clouds is used as labels. In the example shown in FIG. 16, a dataset in a domain (in the daytime under sunny weather) including data representing multiple images captured in the daytime under sunny weather and labels undergoes data augmentation to increase variations of environments such as weather and a time period. The input data (image data) alone undergoes data conversion, whereas the label combined with the data undergoes no data conversion. This generates datasets in multiple domains (e.g., sunny weather, evening, snowy weather, and daytime) including their image data alone extended into various environments.

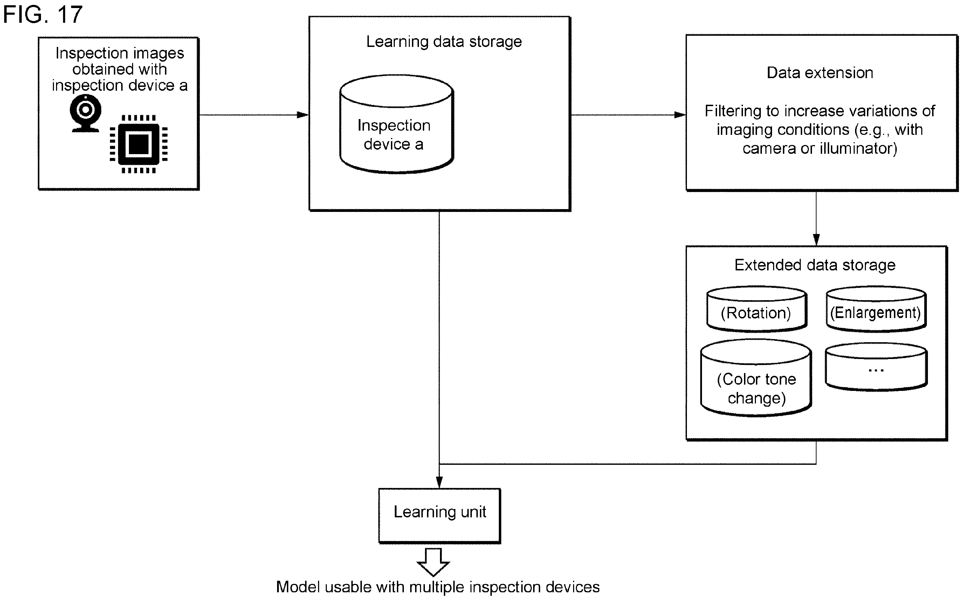

FIG. 17 is a diagram describing an example method for generating machine learning data using data with the data type being an image using unsupervised learning as an example of machine learning. The method is used herein for abnormality detection, or for detecting defective products based on product images. The raw data includes inspection images obtained with an inspection device. Products usually have no defects. Thus, most inspection images used for learning are expected to be images of acceptable products. Such images then undergo data augmentation to increase variations of imaging conditions including conditions associated with a camera or an illuminator. This generates datasets in multiple domains extended into various imaging conditions (e.g., rotation, enlargement, and color tone change).

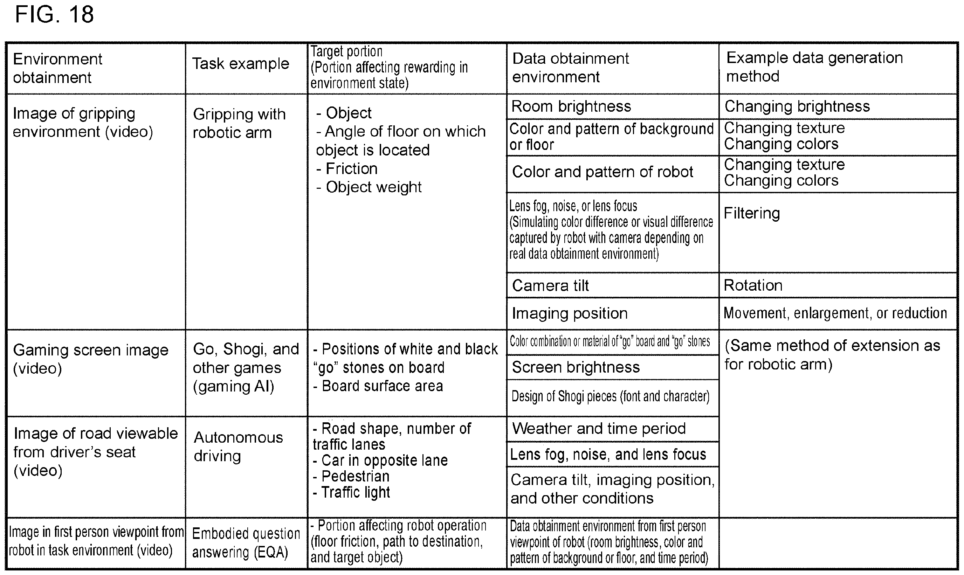

FIG. 18 is a table showing types of data usable with a method for generating machine learning data using reinforced learning as an example of machine learning and example operations of data augmentation for the data types. In reinforced learning, information about a space (environment) containing an agent is used as training data (raw data). This information is the environment obtainment in FIG. 18. For a task of gripping an object with a robotic arm (agent), an image in an environment in which the object is gripped (e.g., an image including a floor on which the object is placed) is used as raw data. For a task of autonomous driving, an image of a road viewable from the driver's seat is used as raw data.

In reinforced learning, the raw data includes a target portion that affects rewarding, and a non-target portion serving as a data obtainment environment that does not affect rewarding. More specifically, the target portion includes, in addition to, for example, an object directly used in the task, an element that affects rewarding (e.g., the material or the angle of the floor on which the object to be gripped with the robotic arm is located). The non-target portion includes, for example, the brightness in the room or the color of the floor.

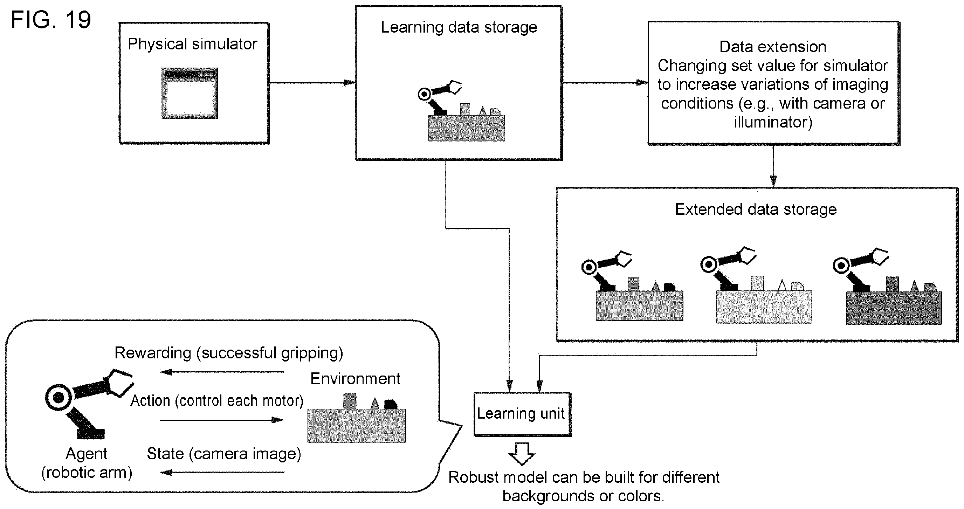

FIG. 19 is a diagram describing an example method for generating machine learning data for a task of gripping with a robotic arm using reinforced learning as an example of machine learning. In the example shown in FIG. 19, a physical simulator is used for learning. Although raw data is generated through simulation in this example, the same method can be used for actually obtained data (e.g., a camera image). The raw data is an image of a space containing a gripping target (e.g., a product) and a platform on which the gripping target is placed when the robotic arm performs a gripping operation using the simulator. The raw data undergoes data augmentation to increase variations of data conditions (e.g., imaging conditions including conditions associated with a camera or an illuminator or the color of the platform) other than elements that affect the success or failure in the gripping operation (e.g., the shape, material, weight, and angle or the surface material of the platform). This generates datasets extended into various imaging conditions (e.g., brightness) or colors.

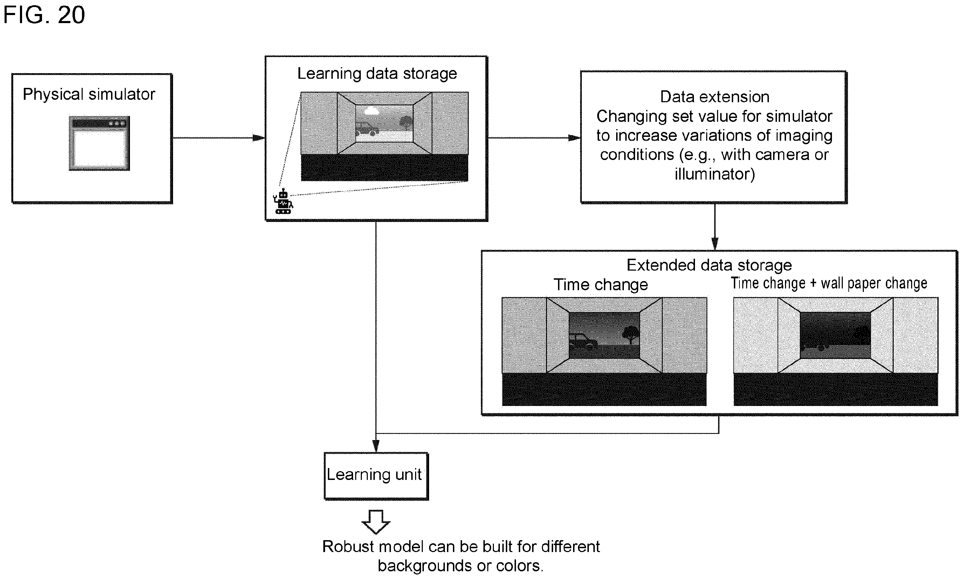

FIG. 20 is a diagram describing an example method for generating machine learning data for a task of embodied question answering (EQA, Reference 3) using reinforced learning as an example of machine learning. An agent that is asked to answer a question from EQA moves to a position at which the agent can access information to answer the question and then outputs the answer. To answer a question about, for example, the color of a car, the agent (robot) searches for a position from which the vehicle is viewable, and stops moving when determining that the agent can view the vehicle. The agent then answers the question by outputting information about the car color. The raw data is an image of the field of view from the robot. In the example shown in FIG. 20 as well, a physical simulator is used for learning.

### Reference 3: Abhishek Das et al. Embodied Question Answering. [Online] https://arxiv.org/abs/1711.11543

In EQA, a target (vehicle in this example) in the raw data to be viewed to answer the question, as well as an element (e.g., the angle of the floor surface, friction, or another factor) that affects a path to the destination and also affects the movement of the agent, affects rewarding and thus serves as a target portion. In contrast, the brightness or the color in the space serves as a non-target portion. The data thus undergoes data augmentation that increases the brightness (e.g., time) and the color in the space (e.g., the color of a wall) to generate datasets including data extended with these conditions.

In the present embodiment, as described above, data augmentation is performed using the training data for meta-learning as raw data to extract datasets including both raw data and data generated through data augmentation as datasets to be used in meta-learning. This generates training data that prevents overfitting and improves the generalization performance of meta-learning.

The raw data then includes the target portion unchanged and the non-target portion changed through data augmentation. This allows generation of various sets of training data usable for generalization learning without changing portions to be unchanged before and after data augmentation.

The embodiments of the present invention described in detail above are mere examples of the present invention in all respects. The embodiments may be variously modified or altered without departing from the scope of the present invention. The above embodiments may be partially or entirely expressed in, but not limited to, the following forms.
Appendix 1 A machine learning data generation method for generating data for domain generalization in machine learning, the method comprising:
   performing, with a computer (10), augmentation using training data as raw data usable to train a machine learning model; and
   extracting, with the computer (10), a dataset including the raw data and data generated through the data augmentation as a dataset for the domain generalization.
Appendix 2 The machine learning data generation method according to appendix 1, wherein
   the raw data and the data generated through the data augmentation are stored as domains of data, and
   the extracting includes extracting, as the dataset for the domain generalization, at least one domain of the raw data and at least one domain of the data generated through the data augmentation.
Appendix 3 The machine learning data generation method according to appendix 1 or appendix 2, wherein
   the raw data includes a target portion and a non-target portion, and
   the augmentation includes performing data augmentation to change the non-target portion included in the raw data.
Appendix 4 The machine learning data generation method according to appendix 3, wherein
   the raw data includes image data,
   the target portion includes an image of a target, and
   the augmentation includes performing data augmentation to change at least one of an environment of the target or an imaging condition for the target in an image included in the raw data.
Appendix 5 The machine learning data generation method according to appendix 4, wherein
   the augmentation includes performing data augmentation to change the environment of the target by changing at least one of a brightness, a background, or a color tone of the image included in the raw data.
Appendix 6 The machine learning data generation method according to appendix 4, wherein
   the augmentation includes performing data augmentation to change the imaging condition for the target by performing at least one of rotating, inverting, enlarging, reducing, moving, trimming, or filtering of the image included in the raw data.
Appendix 7 The machine learning data generation method according to appendix 3, wherein
   the raw data includes voice data,
   the target portion includes a specific voice, and
   the augmentation includes performing data augmentation to change an ambient sound or noise included in the voice data included in the raw data.
Appendix 8 The machine learning data generation method according to appendix 7, wherein
   the augmentation includes performing data augmentation to add an ambient sound to the voice data included in the raw data.
Appendix 9 The machine learning data generation method according to appendix 3, wherein
   the raw data includes signal data,
   the target portion includes a specific signal pattern, and
   the augmentation includes performing data augmentation to change noise in the signal data included in the raw data.
Appendix 10 The machine learning data generation method according to appendix 9, wherein
   the augmentation includes performing data augmentation to add noise to the signal data included in the raw data.
Appendix 11 The machine learning data generation method according to appendix 3, wherein
   the raw data includes text data,
   the target portion includes a specific text pattern, and
   the augmentation includes performing data augmentation to change a wording of the text data included in the raw data.
Appendix 12 The machine learning data generation method according to appendix 11, wherein
   the augmentation includes performing data augmentation to change at least one of a beginning or an ending of the text data included in the raw data.
Appendix 13 The machine learning data generation method according to appendix 2, wherein
   the extracting includes extracting the dataset to include a predetermined ratio of a domain of the raw data and a domain of the data generated through the data augmentation.
Appendix 14 The machine learning data generation method according to appendix 3, wherein
   the raw data includes data associated with a state of an environment containing an agent in reinforced learning, and the target portion includes information about a portion affecting rewarding, and
   the augmentation includes performing data augmentation to change a condition of a portion of the raw data not affecting the rewarding in the state of the environment.
Appendix 15 A meta-learning method, comprising:
   performing domain generalization through meta-learning using a dataset for the domain generalization generated with the machine learning data generation method according to any one of appendixes 1 to 14.
Appendix 16 The meta-learning method according to appendix 15, wherein
   the domain generalization through meta-learning includes performing domain generalization through meta-learning using a plurality of datasets each including at least one domain of the raw data and at least one domain of the data generated through the data augmentation.
Appendix 17 A domain generalization learning method, comprising:
   performing domain generalization learning using a dataset for domain generalization generated with the machine learning data generation method according to any one of appendixes 1 to 14.
Appendix 18 A machine learning data generation apparatus (10) for generating data for domain generalization in machine learning, the apparatus (10) comprising:
   a data generator (21) configured to perform data augmentation using training data as raw data usable to train a machine learning model; and
   a training data extractor (22) configured to extract, as a dataset for the domain generalization, a dataset including the raw data and data generated through the data augmentation.
Appendix 19 A program for causing a computer (10) to generate data for domain generalization in machine learning to function as:
   a data generator (21) configured to perform data augmentation using training data as raw data usable to train a machine learning model; and
   a training data extractor (22) configured to extract, as a dataset for the domain generalization, a dataset including the raw data and data generated through the data augmentation.

### REFERENCE SIGNS LIST

- 10: machine learning data generation apparatus
- 11: processor
- 12: main memory
- 13: camera interface
- 14: input-output interface
- 15: display interface
- 16: communication interface
- 17: storage
- 20: generalization learning program
- 21: data generator
- 22: training data extractor
- 23: learning unit
- 31: original-data storage
- 32: generated-data storage
- 51: camera
- 52: input device
- 53: output device
- 54: display

## Claims

1. A machine learning data generation method for generating data for domain generalization in machine learning, the method comprising:
performing, with a computer (10), augmentation using training data as raw data usable to train a machine learning model; and
extracting, with the computer (10), a dataset including the raw data and data generated through the data augmentation as a dataset for the domain generalization.

2. The machine learning data generation method according to claim 1, wherein
the raw data and the data generated through the data augmentation are stored as domains of data, and
the extracting includes extracting, as the dataset for the domain generalization, at least one domain of the raw data and at least one domain of the data generated through the data augmentation.

3. The machine learning data generation method according to claim 1 or claim 2, wherein
the raw data includes a target portion and a non-target portion, and
the augmentation includes performing data augmentation to change the non-target portion included in the raw data.

4. The machine learning data generation method according to claim 3, wherein
the raw data includes image data,
the target portion includes an image of a target, and
the augmentation includes performing data augmentation to change at least one of an environment of the target or an imaging condition for the target in an image included in the raw data.

5. The machine learning data generation method according to claim 4, wherein
the augmentation includes performing data augmentation to change the environment of the target by changing at least one of a brightness, a background, or a color tone of the image included in the raw data.

6. The machine learning data generation method according to claim 4, wherein
the augmentation includes performing data augmentation to change the imaging condition for the target by performing at least one of rotating, inverting, enlarging, reducing, moving, trimming, or filtering of the image included in the raw data.

7. The machine learning data generation method according to claim 3, wherein
the raw data includes voice data,
the target portion includes a specific voice, and
the augmentation includes performing data augmentation to change an ambient sound or noise included in the voice data included in the raw data.

8. The machine learning data generation method according to claim 7, wherein
the augmentation includes performing data augmentation to add an ambient sound to the voice data included in the raw data.

9. The machine learning data generation method according to claim 3, wherein
the raw data includes signal data,
the target portion includes a specific signal pattern, and
the augmentation includes performing data augmentation to change noise in the signal data included in the raw data.

10. The machine learning data generation method according to claim 9, wherein
the augmentation includes performing data augmentation to add noise to the signal data included in the raw data.

11. The machine learning data generation method according to claim 3, wherein
the raw data includes text data,
the target portion includes a specific text pattern, and
the augmentation includes performing data augmentation to change a wording of the text data included in the raw data.

12. The machine learning data generation method according to claim 11, wherein
the augmentation includes performing data augmentation to change at least one of a beginning or an ending of the text data included in the raw data.

13. The machine learning data generation method according to claim 2, wherein
the extracting includes extracting the dataset to include a predetermined ratio of a domain of the raw data and a domain of the data generated through the data augmentation.

14. The machine learning data generation method according to claim 3, wherein
the raw data includes data associated with a state of an environment containing an agent in reinforced learning, and the target portion includes information about a portion affecting rewarding, and
the augmentation includes performing data augmentation to change a condition of a portion of the raw data not affecting the rewarding in the state of the environment.

15. A meta-learning method, comprising:
performing domain generalization through meta-learning using a dataset for the domain generalization generated with the machine learning data generation method according to any one of claims 1 to 14.

16. The meta-learning method according to claim 15, wherein
the domain generalization through meta-learning includes performing domain generalization through meta-learning using a plurality of datasets each including at least one domain of the raw data and at least one domain of the data generated through the data augmentation.

17. A domain generalization learning method, comprising:
performing domain generalization learning using a dataset for domain generalization generated with the machine learning data generation method according to any one of claims 1 to 14.

18. A machine learning data generation apparatus (10) for generating data for domain generalization in machine learning, the apparatus (10) comprising:
a data generator (21) configured to perform data augmentation using training data as raw data usable to train a machine learning model; and
a training data extractor (22) configured to extract, as a dataset for the domain generalization, a dataset including the raw data and data generated through the data augmentation.

19. A program for causing a computer (10) to generate data for domain generalization in machine learning to function as:
a data generator (21) configured to perform data augmentation using training data as raw data usable to train a machine learning model; and
a training data extractor (22) configured to extract, as a dataset for the domain generalization, a dataset including the raw data and data generated through the data augmentation.
